# EUROPÄISCHE PATENTANMELDUNG

(11) **EP 1 925 853 A2**
(43) Veröffentlichungstag der Anmeldung: **28.05.2008**
(21) Anmeldenummer: 07021862.3
(22) Anmeldetag: 10.11.2007
(51) Int. Cl.: F16H 45/02

(54) **Hydrodynamischer Drehmomentwandler**

(30) Priorität: 23.11.2006 DE 102006055271
(71) Anmelder: ZF Friedrichshafen AG, 88038 Friedrichshafen (DE)
(72) Erfinder: Sasse, Christoph, Dr., 97422 Schweinfurt (DE); Reinhardt, Bernd, 97453 Schonungen (DE)

(57) **Zusammenfassung**

Ein hydrodynamischer Drehmomentwandler umfasst ein Wandlergehäuse (12) mit einem Pumpenrad (38), ein in einem Innenraum (24) des Wandlergehäuses (12) angeordnetes Turbinenrad (28) und eine Überbrückungskupplungsanordnung (50) mit einer ersten Reibflächenformation (52), die mit dem Gehäuse (12) im Wesentlichen drehfest verbunden ist, und einer zweiten Reibflächenformation (54), die mit dem Turbinenrad (28) im Wesentlichen drehfest verbunden ist, wobei der Innenraum (24) des Gehäuses (12) durch ein Kolbenelement (58) in einen das Turbinenrad (28) enthaltenden ersten Raumbereich (68) und einen vom ersten Raumbereich (68) im Wesentlichen fluiddicht getrennten zweiten Raumbereich (70) aufgeteilt ist, wobei bei Fluiddruckerhöhung im zweiten Raumbereich (70) das Kolbenelement (58) mit einem Beaufschlagungsbereich (78) die Reibflächenformationen (52, 54) in den Reibeingriff bringt und somit das Gehäuse (12) und das Turbinenrad (28) zur gemeinsamen Drehung um eine Drehachse koppelt. In dem Kolbenelement (58) ist eine den zweiten Raumbereich (70) mit dem ersten Raumbereich (68) verbindende Fluidströmungsöffnungsanordnung (80) im radialen Bereich der Reibflächenformationen (52, 54) vorgesehen.

## Beschreibung

Die vorliegende Erfindung betrifft einen hydrodynamischen Drehmomentwandler, umfassend ein Wandlergehäuse mit einem Pumpenrad, ein in einem Innenraum des Wandlergehäuses angeordnetes Turbinenrad und eine Überbrückungskupplungsanordnung mit einer ersten Reibflächenformation, die mit dem Gehäuse im Wesentlichen drehfest verbunden ist, und einer zweiten Reibflächenformation, die mit dem Turbinenrad im Wesentlichen drehfest verbunden ist, wobei der Innenraum des Gehäuses durch ein Kolbenelement in einen das Turbinenrad enthaltenden ersten Raumbereich und einen vom ersten Raumbereich im Wesentlichen fluiddicht getrennten zweiten Raumbereich aufgeteilt ist, wobei bei Fluiddruckerhöhung im zweiten Raumbereich das Kolbenelement mit einem Beaufschlagungsbereich die Reibflächenformationen in den Reibeingriff bringt und somit das Gehäuse und das Turbinenrad zur gemeinsamen Drehung um eine Drehachse koppelt.

Aus der DE 197 22 151 C2 ist ein derartiger hydrodynamischer Drehmomentwandler bekannt, bei welchem die beiden Reibflächenformationen jeweils durch mehrere ringscheibenartige bzw. lamellenartige Reibelemente gebildet sind. Durch das Kolbenelement sind diese in Reibeingriff miteinander pressbar. Das Kolbenelement ist in seinem radial inneren Bereich und seinem radial mittleren Bereich fluiddicht axial am Gehäuse verschiebbar geführt. Mithin liegt auch der zweite Raumbereich in radialer Richtung zwischen der Abdichtung radial innen und der Abdichtung im radial mittleren Bereich. In einem sich dann über die radial mittlere Abdichtung weiter nach radial außen erstreckenden Bereich erstreckt sich das Kolbenelement in den Bereich der Reibflächenformationen und kann diese bei Druckerhöhung im zweiten Raumbereich gegeneinander pressen. Um aus dem Bereich dieser reibend miteinander in Wechselwirkung zu bringenden Reibflächenformationen verbessert Wärme abführen zu können, weist das Kolbenelement außerhalb desjenigen Bereich, in welchem es auch den zweiten Raumbereich begrenzt, eine Durchtrittsöffnung auf, um das in den ersten Raumbereich eingeleitete Fluid auch auf die von den Reibflächenformationen abgewandte Seite des radial äußeren Bereichs des Kolbenelements strömen zu lassen und mithin eine bessere Umströmung der reibend miteinander in Wechselwirkung tretenden Oberflächenbereiche mit dem in den ersten Raumbereich eingeleiteten Fluid zu erlangen.

Es ist die Aufgabe der vorliegenden Erfindung, einen hydrodynamischen Drehmomentwandler so auszugestalten, dass im Bereich der in Reibwechselwirkung miteinander zu bringenden Reibflächenformationen durch das in den Innenraum des Gehäuses einzuleitende Fluid eine bessere Kühlwirkung erzielt werden kann.

Erfindungsgemäß wird diese Aufgabe gelöst durch einen hydrodynamischen Drehmomentwandler, umfassend ein Wandlergehäuse mit einem Pumpenrad, ein in einem Innenraum des Wandlergehäuses angeordnetes Turbinenrad und eine Überbrückungskupplungsanordnung mit einer ersten Reibflächenformation, die mit dem Gehäuse im Wesentlichen drehfest verbunden ist, und einer zweiten Reibflächenformation, die mit dem Turbinenrad im Wesentlichen drehfest verbunden ist, wobei der Innenraum des Gehäuses durch ein Kolbenelement in einen das Turbinenrad enthaltenden ersten Raumbereich und einen vom ersten Raumbereich im Wesentlichen fluiddicht getrennten zweiten Raumbereich aufgeteilt ist, wobei bei Fluiddruckerhöhung im zweiten Raumbereich das Kolbenelement mit einem Beaufschlagungsbereich die Reibflächenformationen in den Reibeingriff bringt und somit das Gehäuse und das Turbinenrad zur gemeinsamen Drehung um eine Drehachse koppelt.

Dabei ist weiter vorgesehen, dass in dem Kolbenelement eine den zweiten Raumbereich mit dem ersten Raumbereich verbindende Fluidströmungsöffnungsanordnung im radialen Bereich der Reibflächenformationen vorgesehen ist.

Mit dem erfindungsgemäß aufgebauten hydrodynamischen Drehmomentwandler werden im Vergleich zu dem vorangehend angegebenen Stand der Technik verschiedene Vorteile erlangt. Zum einen stellt die Fluidströmungsöffnungsanordnung eine Verbindung vom zweiten Raumbereich zum ersten Raumbereich her. Insbesondere dann, wenn die Überbrückungskupplungsanordnung zu aktivieren ist, also die Reibflächenformationen in Reibeingriff miteinander zu bringen sind, ist der Fluiddruck im zweiten Raumbereich höher als im ersten Raumbereich, so dass durch die Fluidströmungsöffnungsanordnung hindurch Fluid mit vergleichsweise großem Druck und entsprechend hoher Strömungsgeschwindigkeit strömen wird. Dies führt zu einer deutlich verbesserten Zwangsumströmung der zu füllenden Oberflächenbereiche. Die dadurch erzielbare Kühlwirkung kann dadurch optimal genutzt werden, dass die Fluidströmungsöffnungsanordnung im radialen Bereich der Reibflächenformationen vorgesehen ist, also exakt dort, wo Wärme durch Reibung erzeugt wird und abzuführen ist.

Der hydrodynamische Drehmomentwandler kann beispielsweise so aufgebaut sein, dass eine erste Fluidversorgungskanalanordnung einen zu dem ersten Raumbereich führenden Zuführkanalbereich und einen von dem ersten Raumbereich weg führenden Abführkanalbereich aufweist und dass eine zweite Fluidversorgungskanalanordnung vorgesehen ist zur Fluidzufuhr und Fluidabfuhr zu und von dem zweiten ersten Raumbereich im Wesentlichen unabhängig von der ersten Fluidversorgungskanalanordnung. Dies bedeutet, dass der Wandler vom so genannten 3-Leitungs-Typ ist, also die Fluidzufuhr in den ersten Raumbereich eigenständig bzw. unabhängig von der Fluidzufuhr zum zweiten Raumbereich erfolgen kann.

Weiter kann der Aufbau derart sein, dass die erste Reibflächenformation wenigstens ein mit dem Gehäuse im Wesentlichen drehfest gekoppeltes ringscheibenartiges Reibelement umfasst und dass die zweite Reibflächenformation wenigstens ein mit einem Reibelementträger im Wesentlichen drehfest gekoppeltes ringscheibenartiges Reibelement umfasst.

Die Fluidströmungsöffnungsanordnung kann wenigstens eine in dem Kolbenelement ausgebildete Durchtrittsöffnung umfassen. Dabei kann wenigstens eine Durchtrittsöffnung in dem Kolbenelement vom zweiten Raumbereich zum ersten Raumbereich schräg nach radial außen verlaufen. Durch diese schräge Positionierung, also geneigt unter einem Winkel zur Drehachse und geneigt unter einem Winkel zu einer zur Drehachse senkrecht stehenden Ebene, können auf das in den zweiten Raumbereich strömende Fluid einwirkende Fliehkräfte die Strömung begünstigend genutzt werden. Andererseits kann die durch diese bereits nach radial außen und auf die Reibflächenformationen zu gerichtete Strömungsrichtung nach Art des Strahldüsenprinzips die Förderung von Fluid im ersten Raumbereich nach radial außen weiter unterstützt werden.

Alternativ ist es möglich, dass wenigstens eine Durchtrittsöffnung im Kolbenelement im Wesentlichen axial verläuft. Dies ist besonders dann vorteilhaft, wenn das wenigstens eine Reibelement der zweiten Reibflächenformation mit dem Träger durch Verzahnung im Wesentlichen drehfest gekoppelt ist und wenn wenigstens eine Durchtrittsöffnung zum ersten Raumbereich im radialen Bereich dieser Verzahnung offen ist. In diesem Falle strömt das den zweiten Raumbereich verlassende Fluid unmittelbar in denjenigen Bereich, in welchem wenigstens ein Reibelement mit dem Träger gekoppelt ist. Im Bereich dieser durch Verzahnung gebildeten Kopplung sind im Allgemeinen Zwischenräume vorhanden, welche den Durchtritt des Fluids in axialer Richtung gestatten und somit eine Verteilung im gesamten Bereich der in Reibung miteinander tretenden Oberflächen begünstigen.

Um insbesondere auch die bereits angesprochenen Fliehkrafteffekte nutzen zu können, wird weiter vorgeschlagen, dass wenigstens eine Durchtrittsöffnung radial innerhalb des Beaufschlagungsbereichs des Kolbenelements vorgesehen ist und dass im Beaufschlagungsbereich wenigstens ein diesen radial überbrückender Durchtrittskanal vorgesehen ist.

Um dafür zu sorgen, dass der zweite Raumbereich im Wesentlichen fluiddicht bezüglich des ersten Raumbereichs abgeschlossen ist, gleichwohl jedoch das Kolbenelement zum Einrücken bzw. Ausrücken der Überbrückungskupplungsanordnung verschiebbar ist, wird vorgeschlagen, dass das Kolbenelement in seinem radial äußeren Bereich an einem Führungsabschnitt des Gehäuses unter Wirkung einer Dichtungsanordnung axial verschiebbar geführt ist, wobei die Dichtungsanordnung an dem Kolbenelement ein Dichtelement und am Gehäuse eine Dichtfläche umfasst, entlang welcher das Dichtelement verschiebbar ist. Bei derartiger Ausgestaltung kann die Fluidströmungsöffnungsanordnung wenigstens einen Fluidströmungskanal an dem Dichtelement umfassen, wobei dieser beispielsweise als nutartige Einsenkung am Außenumfangsbereich des Dichtelements ausgebildet sein kann.

Alternativ ist es auch möglich, dass die Fluidströmungsöffnungsanordnung wenigstens einen Fluidströmungskanal an der Dichtfläche umfasst. Dabei kann der wenigstens eine Fluidströmungskanal eine nutartige Einsenkung an der Dichtfläche umfassen.

Um auch das in den ersten Raumbereich eingeleitete Fluid zu einer möglichst effizienten Kühlung der Überbrückungskupplungsanordnung nutzen zu können, wird vorgeschlagen, dass im ersten Raumbereich ein Fluidleitelement dem Kolbenelement benachbart vorgesehen ist und mit diesem einen von radial innen vom Bereich der Fluidzufuhr in den ersten Raumbereich nach radial außen zum Bereich der Reibflächenformationen führenden Teilbereich des ersten Raumbereichs begrenzt.

Weiter betrifft die Erfindung einen hydrodynamischen Drehmomentwandler, umfassend ein Wandlergehäuse mit einem Pumpenrad, ein in einem Innenraum des Wandlergehäuses angeordnetes Turbinenrad und eine Überbrückungskupplungsanordnung mit einer ersten Reibflächenformation, die mit dem Gehäuse im Wesentlichen drehfest verbunden ist, und einer zweiten Reibflächenformation, die mit dem Turbinenrad im Wesentlichen drehfest verbunden ist, wobei der Innenraum des Gehäuses durch ein Kolbenelement in einen das Turbinenrad enthaltenden ersten Raumbereich und einen vom ersten Raumbereich im Wesentlichen fluiddicht getrennten zweiten Raumbereich aufgeteilt ist, wobei bei Fluiddruckerhöhung im zweiten Raumbereich das Kolbenelement mit einem Beaufschlagungsbereich die Reibflächenformationen in den Reibeingriff bringt und somit das Gehäuse und das Turbinenrad zur gemeinsamen Drehung um eine Drehachse koppelt, wobei eine erste Fluidversorgungskanalanordnung einen zu dem ersten Raumbereich führenden Zuführkanalbereich und einen von dem ersten Raumbereich weg führenden Abführkanalbereich aufweist und wobei eine zweite Fluidversorgungskanalanordnung vorgesehen ist zur Fluidzufuhr und Fluidabfuhr zu und von dem zweiten ersten Raumbereich im Wesentlichen unabhängig von der ersten Fluidversorgungskanalanordnung, wobei in dem Kolbenelement eine den zweiten Raumbereich mit dem ersten Raumbereich verbindende Fluidströmungsöffnungsanordnung vorgesehen ist,

Die vorliegende Erfindung wird nachfolgend mit Bezug auf die beiliegenden Zeichnungen detailliert beschrieben. Es zeigt:
- Fig. 1: eine Teil-Längsschnittansicht eines hydrodynamischen Drehmomentwandlers;
- Fig. 2: eine vergrößerte Detailansicht des Bereichs der Überbrückungskupplungsanordnung des in Fig. 1 dargestellten hydrodynamischen Drehmomentwandlers;
- Fig. 3: eine der Fig. 2 entsprechende Ansicht einer abgewandelten Ausgestaltungsform;
- Fig. 4: eine der Fig. 2 entsprechende Ansicht einer abgewandelten Ausgestaltungsform;
- Fig. 5: eine der Fig. 2 entsprechende Ansicht einer abgewandelten Ausgestaltungsform.

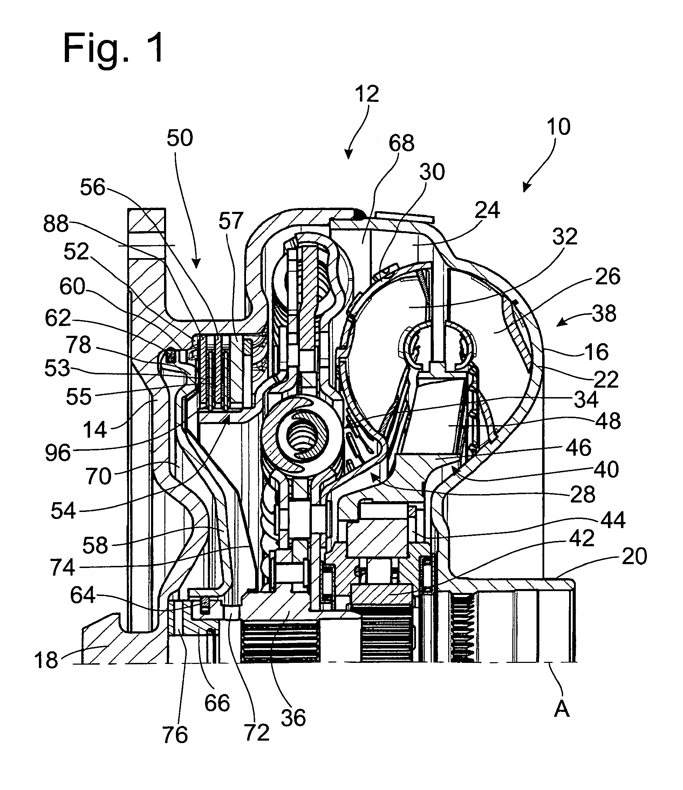

Der in Fig. 1 dargestellte hydrodynamische Drehmomentwandler 10 umfasst ein Gehäuse 12 mit zwei Gehäuseteilen 14, 16. Das Gehäuseteil 14 trägt radial innen einen Lagerzapfen 18 und ist zur Ankopplung an eine Antriebswelle vorgesehen bzw. ausgestaltet. Das mit dem Gehäuseteil, 14 radial außen durch Verschweißung fest verbundene Gehäuseteil 16 bildet radial innen eine in ein Getriebe eingreifend zu positionierende Wandlernabe 20 und bildet weiter radial außen eine Pumpenradschale 22. An der einem Innenraum 24 des Gehäuse 12 zugewandten Seite sind an dieser Pumpenradschale 22 mehrere Pumpenradschaufeln 26 in Umfangsrichtung um eine Drehachse A aufeinander folgend angeordnet. Im Innenraum 24 ist weiterhin ein Turbinenrad 28 angeordnet. Dieses umfasst eine Turbinenradschale 30 mit einer Mehrzahl von daran den Pumpenradschaufeln 26 gegenüberliegend getragenen Turbinenradschaufeln 32. Die Turbinenradschale 30 ist über eine allgemein mit 34 bezeichnete Torsionsschwingungsdämpferanordnung mit einer Turbinenradnabe 36 gekoppelt. Die Turbinenradnabe 36 ist an ihrer Innenumfangsseite mit einer Verzahnung versehen und kann mit dieser Verzahnung in Drehkopplungseingriff mit einer Abtriebswelle, also beispielsweise einer Getriebeeingangswelle, gebracht werden.

Axial zwischen dem Turbinenrad 28 und dem im Wesentlichen durch die Pumpenradschaufeln 26 und die Pumpenradschale 22 gebildeten Pumpenrad 38 ist ein Leitrad 40 angeordnet. Eine Leitradnabe 42 ist auf einer nicht dargestellten Stützwelle drehfest getragen und trägt über einen in einer Drehrichtung sperrenden Freilauf 44 einen Leitradring 46 mit einer Mehrzahl von daran getragenen Leitradschaufeln 48.

Eine Überbrückungskupplungsanordnung 50 dient dazu, unter Überbrückung des hydrodynamischen Kreislaufs ein Drehmoment direkt zwischen dem Gehäuse 12 und dem Turbinenrad 28 und mithin der Abtriebswelle zu übertragen. Zu diesem Zweck weist die Überbrückungskupplungsanordnung 50 in Reibeingriff miteinander bringbare Reibflächenformationen 52 und 54 am Gehäuse 12 einerseits und an einem über den zweistufig ausgebildeten Torsionsschwingungsdämpfer 34 mit dem Turbinenrad 28 bzw. der Turbinenradnabe 36 gekoppelten Träger 56 andererseits auf. Jede dieser Reibflächenformationen umfasst mehrere ringscheibenartig ausgebildete Reibelemente bzw. Lamellen, wobei die Reibelemente 53, 55, 57 der Reibflächenformation 52 durch Verzahnungseingriff mit dem Gehäuseteil 14 im Wesentlichen drehfest, bezüglich diesem jedoch axial bewegbar gekoppelt sind, während die Reibelemente 88, 90 der Reibflächenformation 54 entsprechend durch Verzahnung mit dem Träger 56 drehfest, bezüglich diesem jedoch axial bewegbar gekoppelt sind.

Ein Kolbenelement 58 der Überbrückungskupplungsanordnung 50 ist am Gehäuse 12 axial bewegbar geführt. Zu diesem Zweck weist das Gehäuse 12 bzw. das Gehäuseteil 14 desselben radial außen eine Führungsfläche 60 auf, entlang welcher ein radial außen am Kolbenelement 58 vorgesehenes Dichtungselement 62 in axialer Richtung verschiebbar ist. Am radial inneren Endbereich ist das Kolbenelement 58 ebenfalls unter Zwischenlagerung eines Dichtungselements 64 fluiddicht und axial bewegbar geführt, und zwar auf einem axialen Endbereich der Turbinenradnabe 36. Dieser wiederum ist an einem beispielsweise mit dem Gehäuseteil 14 innen durch Verschweißung verbundenen Lagerteil 66 radial und axial abgestützt, wobei zwischen der Turbinenradnabe 36 und dem Lagerteil 66 ein im Wesentlichen fluiddichter Anlagekontakt geschaffen ist.

Durch das Kolbenelement 58 ist der Innenraum 24 des Gehäuses in zwei Raumbereiche 68, 70 unterteilt. Ein erster in der Fig. 1 rechts vom Kolbenelement 58 liegender Raumbereich 68 enthält im Wesentlichen das Turbinenrad 28, den Torsionsschwingungsdämpfer 34 und die Reibflächenformationen 52, 54 der Überbrückungskupplungsanordnung 50. Über eine bzw. mehrere in der Turbinenradnabe 36 gebildete Öffnungen 72 und eine zu dieser führende Zuführkanalanordnung kann Fluid, beispielsweise Schmieröl, in den ersten Raumbereich 68 eingeleitet werden. Dieses Fluid wird durch ein auf der Turbinenradnabe 36 gelagertes und bis in den Bereich der Reibflächenformationen 52, 54 sich erstreckendes, ringscheibenartiges Leitelement 74 nach radial außen geführt, und zwar in den Bereich der Reibflächenformationen 52, 54. Dort umströmt es die reibend miteinander in Wechselwirkung zu bringenden Oberflächen und gelangt in denjenigen Teil des Raumbereichs 68, in welchem auch das Turbinenrad 28 liegt. Dort kann beispielsweise im radial inneren Bereich des Leitrads vorbei an dort vorgesehenen Axialabstützlagern für das Leitrad das Fluid wieder über eine Abführkanalanordnung aus dem ersten Raumbereich 68 abgezogen werden. Es ist selbstverständlich, dass die Zuführkanalanordnung bzw. die Abführkanalanordnung Durchgangsöffnungen, beispielsweise in der Getriebeeingangswelle sowie Zwischenräume zwischen dieser Getriebeeingangswelle und der Stützwelle bzw. der Stützwelle und der Wandernabe 20 umfassen kann. Grundsätzlich ist also der Wandler von dem 3-Leitungs-Typ. Die Fluidzirkulation im ersten Raumbereich 68 kann also unabhängig von der Fluidzufuhr bzw. Fluidabfuhr zu bzw. vom zweiten Raumbereich 70 eingestellt werden. Dazu ist in dem bereits angesprochenen Lagerteil 66, das mit dem Gehäuseteil 14 fest verbunden ist, ebenfalls eine oder mehrere Öffnungen 76 vorgesehen, über welche beispielsweise durch eine zentrale Öffnung in der Getriebeeingangswelle zugeführtes Fluid in den zweiten Raumbereich 70 gespeist werden kann. Soll die Überbrückungskupplungsanordnung 50 eingerückt werden, wird durch entsprechende Fluidzufuhr in den zweiten Raumbereich 70 dort der Fluiddruck erhöht und somit das Kolbenelement 58 mit einem im radialen Bereich der Reibflächenformationen 52, 54 angeordneten Beaufschlagungsbereich 78 gegen die Reibflächenformationen 52, 54 bzw. das Reibelement 53 der Reibflächenformation 52 gepresst. Dadurch kommen die verschiedenen Reibelemente, von welchen beispielsweise die Reibelemente 88, 90 der Reibflächenformation 54 Reibbeläge tragen können, in Reibanlage gegeneinander und übertragen ein Drehmoment direkt zwischen dem Gehäuse 12 und dem Turbinenrad 28 bzw. der Turbinenradnabe 36 über den Träger 56 und den Torsionsschwingungsdämpfer 34.

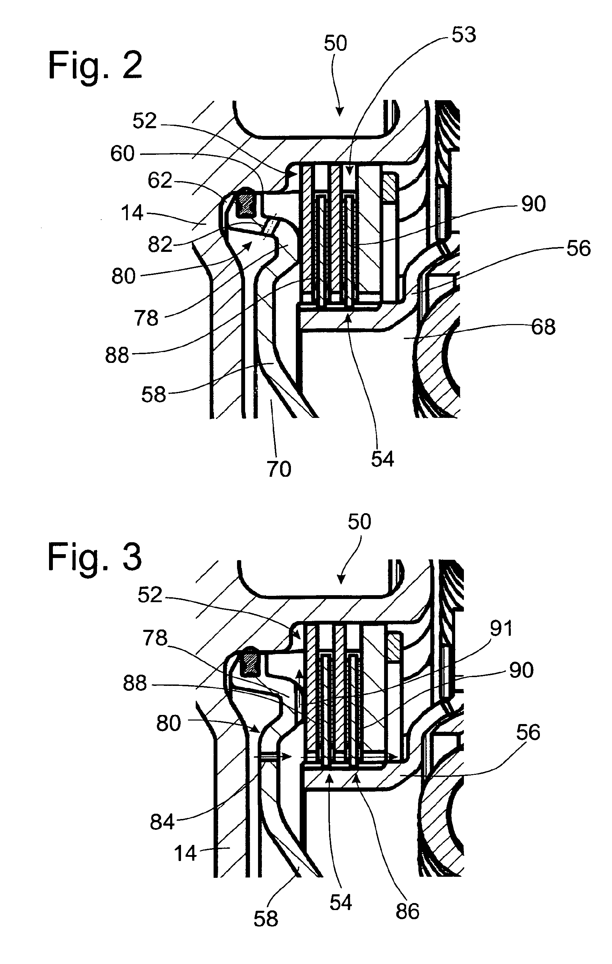

In Fig. 2 erkennt man, dass im Kolbenelement 58 eine Fluidströmungsöffnungsanordnung 80 vorgesehen ist, welche eine Strömungsverbindung zwischen dem zweiten Raumbereich 70 und dem ersten Raumbereich 68 herstellt. Im dargestellten Beispiel umfasst die Fluidströmungsöffnungsanordnung 80 eine bzw. mehrere in Umfangsrichtung verteilt am Kolbenelement 58 gebildete Durchtrittsöffnungen 82. Diese liegen hier radial außerhalb des Beaufschlagungsbereichs 78, jedoch im radialen Erstreckungsbereich der Reibflächenformationen 52, 54. Weiter erkennt man, dass die Durchtrittsöffnungen 82 schräg nach radial außen verlaufen, so dass das im Raumbereich 70 unter höherem Druck stehende Fluid schräg nach radial außen und mithin auch auf die Reibflächenformationen 52, 54 zu gerichtet aus dem zweiten Raumbereich 70 austritt und in den ersten Raumbereich 68 eintritt. Es wird somit vor allem dann, wenn durch Erhöhung des Fluiddrucks im ersten Raumbereich 70 die Überbrückungskupplungsanordnung 50 in einen Einrückzustand gebracht wird, eine zusätzliche Anströmung der reibend miteinander in Wechselwirkung tretenden Oberflächenbereiche der Reibflächenformationen 52, 54 erzielt. Dabei ist vor allem in Kombination der in Fig. 2 gezeigten Orientierung der Durchtrittsöffnungen 82 mit dem in Fig. 1 erkennbaren Strömungsführungselement 74 eine verstärkte Förderung von Fluid nach radial außen durch das Strahldüsenprinzip bzw. Strahlpumpenprinzip erhaltbar.

Bei einer in Fig. 3 erkennbaren Abwandlung umfasst die Fluidströmungsöffnungsanordnung 80 wiederum eine oder mehrere Durchtrittsöffnungen 84, die nunmehr jedoch im Wesentlichen axial orientiert sind und radial in demjenigen Bereich liegen, in welchem die Reibelemente 88, 90 der mit dem Träger 56 gekoppelten Reibflächenformation 54 durch Verzahnung mit dem Träger 56 gekoppelt sind. Im Bereich dieser Verzahnungskopplung 86 zwischen dem Träger 56 und den Reibelementen 88, 90 der Reibflächenformation 54 sind Zwischenräume gebildet, durch welche ohnehin für einen axialen Fluiddurchtritt und mithin die Umströmbarkeit der Reibelemente gesorgt ist. Das unter hohem Druck und somit mit hoher Geschwindigkeit durch die Durchtrittsöffnungen 84 axial austretende Fluid gelangt genau in diesen Bereich und unterstützt somit die Umströmung der Reibflächenformationen 52, 54. Um auch eine verstärkte Anströmung nach radial außen hin zu ermöglichen, sind im Beaufschlagungsbereich 78 des Kolbenelements 58 in Umfangsrichtung verteilt mehrere nach radial außen führende und beispielsweise axial in Richtung zu den Reibflächenformationen 52, 54 offene Durchtrittskanäle 91 vorgesehen, durch welche auch unter Fliehkrafteinwirkung das aus den Durchtrittsöffnungen 84 austretende Fluid nach radial außen gelangen kann.

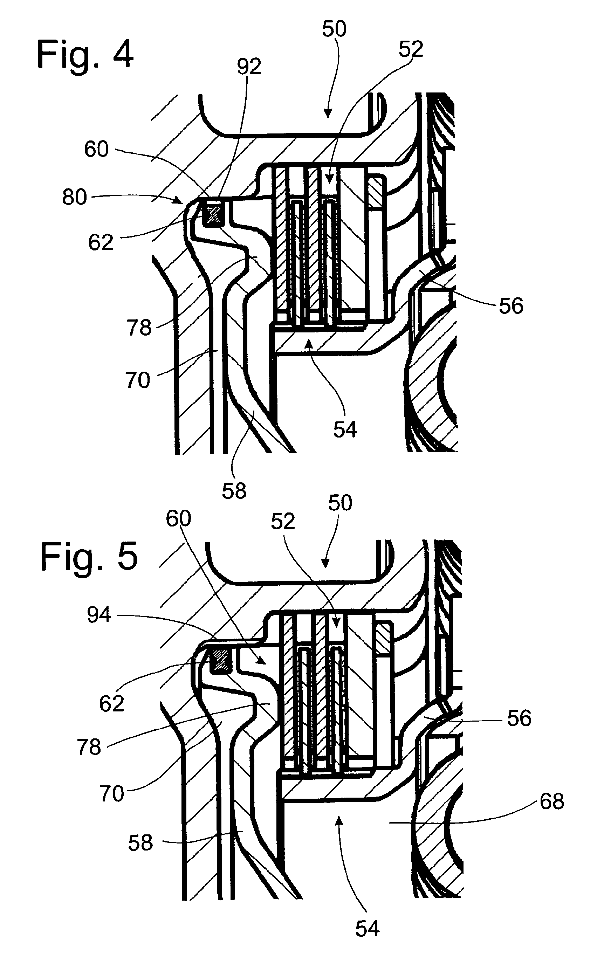

Eine weitere Abwandlung ist in Fig. 4 gezeigt. Man erkennt hier wieder das Kolbenelement 58 mit seinem Beaufschlagungsbereich 78 und dem radial außen daran getragenen Dichtungselement 62. Die Fluidströmungsöffnungsanordnung 80 umfasst in dieser Ausgestaltungsform eine oder mehrere in Umfangsrichtung aufeinander folgende nutartige Einsenkungen 92 am Außenumfangsbereich des Dichtungselements 62, also in demjenigen Bereich, wo dieses in Dichtwechselwirkung mit der Führungsfläche bzw. Dichtfläche 60 ist. Somit kann im zweiten Raumbereich 70 unter höherem Fluiddruck enthaltenes Fluid an diesen Bereichen das Dichtungselement 62 axial durchströmen und wieder im radialen Bereich der Reibflächenformationen 52, 54 auf diese zu strömen und Wärme abführen.

Dieses Prinzip kann bei einer alternativen Variante so wie in Fig. 5 dargestellt realisiert sein. Hier sind an der Führungsfläche bzw. Dichtfläche 60 vorzugsweise mehrere in Umfangsrichtung aufeinander folgend angeordnete nutartige Einsenkungen 94 vorgesehen, welche das Dichtelement 62 überbrücken und mithin den Fluideintritt vom zweiten Raumbereich 70 in den ersten Raumbereich 68 im radialen Bereich der Reibflächenformationen 52 bzw. 54 ermöglichen.

Es sei abschließend darauf hingewiesen, dass selbstverständlich die verschiedenen Ausgestaltungsvarianten der Fluidströmungsöffnungsanordnung kombiniert werden können. Dabei kann durch die Dimensionierung der jeweiligen Strömungsquerschnitte dafür gesorgt werden, dass auch unter Berücksichtigung der Förderkapazität eine Fluidpumpe im zweiten Raumbereich immer ein ausreichend hoher Fluiddruck erzeugt werden kann, um die Überbrückungskupplungsanordnung im vollständig eingerückten Zustand halten zu können.

Weiter sei darauf hingewiesen, dass der hydrodynamische Drehmomentwandler 10 hinsichtlich seiner weiteren Baugruppen, wie z. B. Turbinenrad, Torsionsschwingungsdämpfer, anders ausgebildet sein kann als vorangehend beschrieben. Auch die Überbrückungskupplungsanordnung kann vor allem hinsichtlich der Reibflächenformationen anders aufgebaut sein. So könnte beispielsweise eine der Reibflächenformationen unmittelbar an einem Träger gebildet sein oder es könnte eine andere Anzahl bzw. Ausgestaltung an miteinander in Reibwechselwirkung zu bringenden Reibelementen vorgesehen sein.

## Patentansprüche

1. Hydrodynamischer Drehmomentwandler, umfassend ein Wandlergehäuse (12) mit einem Pumpenrad (38), ein in einem Innenraum (24) des Wandlergehäuses (12) angeordnetes Turbinenrad (28) und eine Überbrückungskupplungsanordnung (50) mit einer ersten Reibflächenformation (52), die mit dem Gehäuse (12) im Wesentlichen drehfest verbunden ist, und einer zweiten Reibflächenformation (54), die mit dem Turbinenrad (28) im Wesentlichen drehfest verbunden ist, wobei der Innenraum (24) des Gehäuses (12) durch ein Kolbenelement (58) in einen das Turbinenrad (28) enthaltenden ersten Raumbereich (68) und einen vom ersten Raumbereich (68) im Wesentlichen fluiddicht getrennten zweiten Raumbereich (70) aufgeteilt ist, wobei bei Fluiddruckerhöhung im zweiten Raumbereich (70) das Kolbenelement (58) mit einem Beaufschlagungsbereich (78) die Reibflächenformationen (52, 54) in den Reibeingriff bringt und somit das Gehäuse (12) und das Turbinenrad (28) zur gemeinsamen Drehung um eine Drehachse koppelt,
**dadurch gekennzeichnet,**
**dass** in dem Kolbenelement (58) eine den zweiten Raumbereich (70) mit dem ersten Raumbereich (68) verbindende Fluidströmungsöffnungsanordnung (80) im radialen Bereich der Reibflächenformationen (52, 54) vorgesehen ist.

2. Hydrodynamischer Drehmomentwandler nach Anspruch 1,
**dadurch gekennzeichnet, dass** eine erste Fluidversorgungskanalanordnung einen zu dem ersten Raumbereich (68) führenden Zuführkanalbereich und einen von dem ersten Raumbereich (68) weg führenden Abführkanalbereich aufweist und dass eine zweite Fluidversorgungskanalanordnung vorgesehen ist zur Fluidzufuhr und Fluidabfuhr zu und von dem zweiten Raumbereich (70) im Wesentlichen unabhängig von der ersten Fluidversorgungskanalanordnung.

3. Hydrodynamischer Drehmomentwandler nach Anspruch 1 oder 2,
**dadurch gekennzeichnet, dass** die erste Reibflächenformation (52) wenigstens ein mit dem Gehäuse im Wesentlichen drehfest gekoppeltes ringscheibenartiges Reibelement (53, 55, 57) umfasst und dass die zweite Reibflächenformation (54) wenigstens ein mit einem Reibelementträger (56) im Wesentlichen drehfest gekoppeltes ringscheibenartiges Reibelement (88, 90) umfasst.

4. Hydrodynamischer Drehmomentwandler nach einem der Ansprüche 1 bis 3,
**dadurch gekennzeichnet,**
**dass** die Fluidströmungsöffnungsanordnung (80) wenigstens eine in dem Kolbenelement (58) ausgebildete Durchtrittsöffnung (82; 84) umfasst.

5. Hydrodynamischer Drehmomentwandler nach Anspruch 4,
**dadurch gekennzeichnet, dass** wenigstens eine Durchtrittsöffnung (82) in dem Kolbenelement (58) vom zweiten Raumbereich (70) zum ersten Raumbereich (68) schräg nach radial außen verläuft.

6. Hydrodynamischer Drehmomentwandler nach Anspruch 7,
**dadurch gekennzeichnet, dass** wenigstens eine Durchtrittsöffnung (84) im Kolbenelement (58) im Wesentlichen axial verläuft.

7. Hydrodynamischer Drehmomentwandler nach Anspruch 5 oder 6,
**dadurch gekennzeichnet, dass** das wenigstens eine Reibelement (88, 90) der zweiten Reibflächenformation (54) mit dem Träger (56) durch Verzahnung (86) im Wesentlichen drehfest gekoppelt ist und dass wenigstens eine Durchtrittsöffnung (84) zum ersten Raumbereich (68) im radialen Bereich dieser Verzahnung (86) offen ist.

8. Hydrodynamischer Drehmomentwandler nach einem der Ansprüche 5 bis 7,
**dadurch gekennzeichnet, dass** wenigstens eine Durchtrittsöffnung (84) radial innerhalb des Beaufschlagungsbereichs (78) des Kolbenelements (58) vorgesehen ist und dass im Beaufschlagungsbereich (78) wenigstens ein diesen radial überbrückender Durchtrittskanal (91) vorgesehen ist.

9. Hydrodynamischer Drehmomentwandler nach einem der Ansprüche 1 bis 8,
**dadurch gekennzeichnet, dass** das Kolbenelement (58) in seinem radial äußeren Bereich an einem Führungsabschnitt des Gehäuses (12) unter Wirkung einer Dichtungsanordnung (60, 62) axial verschiebbar geführt ist, wobei die Dichtungsanordnung (60, 62) an dem Kolbenelement (58) ein Dichtelement (62) und am Gehäuse (12) eine Dichtfläche (60) umfasst, entlang welcher das Dichtelement (62) verschiebbar ist.

10. Hydrodynamischer Drehmomentwandler nach Anspruch 9,
**dadurch gekennzeichnet, dass** die Fluidströmungsöffnungsanordnung (80) wenigstens einen Fluidströmungskanal (92) an dem Dichtelement (62) umfasst.

11. Hydrodynamischer Drehmomentwandler nach Anspruch 10,
**dadurch gekennzeichnet, dass** der wenigstens eine Fluidströmungskanal (92) eine nutartige Einsenkung (92) am Außenumfangsbereich des Dichtelements (62) umfasst.

12. Hydrodynamischer Drehmomentwandler nach einem der Ansprüche 9 bis 11,
**dadurch gekennzeichnet, dass** die Fluidströmungsöffnungsanordnung (80) wenigstens einen Fluidströmungskanal (94) an der Dichtfläche (80) umfasst.

13. Hydrodynamischer Drehmomentwandler nach Anspruch 12,
**dadurch gekennzeichnet, dass** der wenigstens eine Fluidströmungskanal (94) eine nutartige Einsenkung (94) an der Dichtfläche (60) umfasst.

14. Hydrodynamischer Drehmomentwandler nach einem der Ansprüche 1 bis 13,
**dadurch gekennzeichnet, dass** im ersten Raumbereich (68) ein Fluidleitelement (74) dem Kolbenelement (58) benachbart vorgesehen ist und mit diesem einen von radial innen vom Bereich der Fluidzufuhr in den ersten Raumbereich (68) nach radial außen zum Bereich der Reibflächenformationen (52, 54) führenden Teilbereich des ersten Raumbereichs (68) begrenzt.

15. Hydrodynamischer Drehmomentwandler, umfassend ein Wandlergehäuse (12) mit einem Pumpenrad (38), ein in einem Innenraum (24) des Wandlergehäuses (12) angeordnetes Turbinenrad (28) und eine Überbrückungskupplungsanordnung (50) mit einer ersten Reibflächenformation (52), die mit dem Gehäuse (12) im Wesentlichen drehfest verbunden ist, und einer zweiten Reibflächenformation (54), die mit dem Turbinenrad (28) im Wesentlichen drehfest verbunden ist, wobei der Innenraum (24) des Gehäuses (12) durch ein Kolbenelement (58) in einen das Turbinenrad (28) enthaltenden ersten Raumbereich (68) und einen vom ersten Raumbereich (68) im Wesentlichen fluiddicht getrennten zweiten Raumbereich (70) aufgeteilt ist, wobei bei Fluiddruckerhöhung im zweiten Raumbereich (70) das Kolbenelement (58) mit einem Beaufschlagungsbereich (78) die Reibflächenformationen (54, 54) in den Reibeingriff bringt und somit das Gehäuse (12) und das Turbinenrad (28) zur gemeinsamen Drehung um eine Drehachse koppelt, wobei eine erste Fluidversorgungskanalanordnung einen zu dem ersten Raumbereich (68) führenden Zuführkanalbereich und einen von dem ersten Raumbereich (68) weg führenden Abführkanalbereich aufweist und wobei eine zweite Fluidversorgungskanalanordnung vorgesehen ist zur Fluidzufuhr und Fluidabfuhr zu und von dem zweiten ersten Raumbereich (70) im Wesentlichen unabhängig von der ersten Fluidversorgungskanalanordnung, wobei in dem Kolbenelement eine den zweiten Raumbereich mit dem ersten Raumbereich verbindende Fluidströmungsöffnungsanordnung (80) vorgesehen ist, optional in Verbindung mit einem oder mehreren der Merkmale der vorangehenden Ansprüche.
